Europäisches Patentamt

European Patent Office

Office européen des brevets

(19)

(11) Veröffentlichungsnummer: **0 263 217 B1**

## (12) EUROPÄISCHE PATENTSCHRIFT

(45) Veröffentlichungstag der Patentschrift: **31.07.91**

(51) Int. Cl.⁵: **B61K 9/06**

(21) Anmeldenummer: **86401965.8**

(22) Anmeldetag: **09.09.86**

---

(54) **System zum Erkennen unzulässig erwärmter Bauteile an fahrenden Schienenfahrzeugen.**

---

(43) Veröffentlichungstag der Anmeldung:
**13.04.88 Patentblatt 88/15**

(45) Bekanntmachung des Hinweises auf die
Patenterteilung:
**31.07.91 Patentblatt 91/31**

(84) Benannte Vertragsstaaten:
**AT BE CH DE FR GB IT LI LU NL SE**

(56) Entgegenhaltungen:
**EP-A- 0 041 178**
**FR-A- 1 274 794**
**GB-A- 969 348**
**GB-A- 976 287**
**GB-A- 2 072 836**

(73) Patentinhaber: **COMPAGNIE DE SIGNAUX ET
D'EQUIPEMENTS ELECTRONIQUES
99, avenue Aristide Briand
F-92120 Montrouge(FR)**

(72) Erfinder: **Hedoin, Dominique
15, allée d'Honneur
F-92330 Sceaux(FR)**
Erfinder: **Meunier, Christian
37, rue Beaugendre
F-78400 Chatou(FR)**

(74) Vertreter: **Chameroy, Claude et al
c/o Cabinet Malemont 42, avenue du Président Wilson
F-75116 Paris(FR)**

## Beschreibung

Die Erfindung betrifft ein System nach der Gattung des Anspruchs 1.

Es ist bekannt, nahe den Gleisen einer Eisenbahnstrecke infrarotempfindliche Detektoren anzuordnen, und mittels geeigneter optischer Vorrichtungen einen Teil der von den Lagern vorbeilaufender Eisenbahnwagen ausgehenden Wärmestrahlung (= Infrarotstrahlung) auf den Detektor zu projizieren. Die Detektoren liefern dabei ein der Lagerwärme proportionales elektrisches Signal, an dessen Intensität sich erkennen läßt, ob eines der vorbeilaufenden Lager sich unzulässig erwärmt hat, d.h. heißgelaufen ist. Zu diesem Zweck sind dem Detektor elektrische Verstärker und elektronische Schaltmittel (Auswertungseinrichtung) nachgeschaltet, die eine Reihe von Schwellwertschaltern enthalten. Die Schwellwertschalter sprechen auf bestimmte Signalstärken an und melden so heißgelaufene Lager. Außerdem sind am Gleis noch Gleisschaltmittel vorhanden, die von den vorbeifahrenden Rädern geschaltet werden und die gesamte Erkennungsschaltung nur dann aktivieren, wenn ein Rad vorbeifährt.

Ferner ist es bekannt, derartige Erkennungs-Vorrichtungen in gleicher Weise zum Erkennen heißgelaufener Bremsen bzw. Radkränze zu verwenden. Zur Vermeidung des Nachteils dieser Vorrichtungen, daß für das Erkennen von heißgelaufenen Lagern und von heißgelaufenen Bremsen bzw. Radkränzen zwei getrennte Vorrichtungen vorgesehen sind, die auch räumlich an der Gleisstrecke an völlig getrennten Plätzen stehen, wird bei einer weiteren bekannten Vorrichtung (DE-A1 30 20 331) dadurch vermieden, daß die Auswertungseinrichtung sowohl Schwellwertschalter zur Erkennung einer erhöhten Lagertemperatur als auch zur Erkennung einer erhöhten Radkranz- bzw. Bremsklotztemperatur enthält, und daß der Detektor für die Lagertemperatur und der Detektor für die Radkranztemperatur in einem gemeinsamen Gehäuse baulich vereinigt sind.

Abgesehen davon, daß auch diese bekannte Vorrichtung relativ aufwendig ist, ist bei vielen Eisenbahnen nicht nur die Überwachung der Radlager sowie der Laufflächen der Räder erforderlich sondern auch die Temperatur von Bremsscheiben. Letztere können sowohl an der Außenseite der Räder als auch zwischen den Rädern eines Radsatzes angeordnet sein. Die Überwachung der Bremsscheiben erfordert eine Meßachse, welche von denjenigen für die Überwachung der Lager bzw. der Radgrenze verschieden ist. Schließlich erfordert die Überwachung von Gleitlagern eine andere Meßachse als die Überwachung von Wälzlagern. Der Grund dafür ist darin zu sehen, daß die Wälzlager sich relativ gleichmäßig erwärmen, während Gleitlager in ein mit Öl gefülltes Gehäuse eingebaut sind, wobei lediglich an den Seitenwänden des Gehäuses eine zur Auswertung geeignete Temperatur herrscht. Die Anforderungen an Vorrichtungen zum Erkennen unzulässig erwärmter Bauteile an fahrenden Schienenfahrzeugen sind je nach Fahrzeugpark der einzelnen Bahnverwaltungen verschieden.

GB-A-969 348 beschreibt ein System zum Erkennung unzulässig erwärmter Bauteile (Radnabe, Radflansch, Radkranz, und Bremsklotz) an fahrenden Schienenfahrzeugen, mit einem am Eisenbahngleis stationär angeordneten Abtaster für Infrarotstrahlung und nachgeschalteter Auswertungseinrichtung, sowie Gleisschaltmitteln zur Aktivierung des Abtasters, wobei der Abtaster derart angeordnet ist, dass mehrere verschiedene zu überwachende Bauteile nacheinander erfasst werden und wobei mit Hilfe der Auswertungseinrichtung einzelne den jeweiligen Bauteilen zugeordnete Zeitabschnitte der von einem im Abtaster angeordnete IR-Sensor erzeugte Signale nach den jeweiligen durch die Art der Bauteile gegebenen Erfordernissen ausgewertet werden.

Aufgabe der vorliegenden Erfindung ist es, ein System zum Erkennen unzulässig erwärmter Bauteile an fahrenden Schienenfahrzeugen anzugeben, bei welchem mit Hilfe eines Abtasters mehrere verschiedene Bauteile bei einer Vorbeifahrt des Fahrzeugs überwacht werden können.

Das erfindungsgemäße System mit den kennzeichnenden Merkmalen des Hauptanspruchs hat den Vorteil, daß mehrere der obengenannten Überwachungsaufgaben bei einer Vorbeifahrt des Schienenfahrzeuges wahrgenommen werden können, wobei lediglich ein Abtaster auf jeder Seite des Gleises erforderlich ist. Selbst wenn bei vielen Anwendungsfällen nicht alle der obengenannten Meßaufgaben in einem System vereinigt werden, so ermöglicht die Erfindung eine einfache Anpassung des erfindungsgemäßen Systems an verschiedene der obengenannten Überwachungsaufgaben, was eine Vereinfachung bei der Fertigung, Einzel- bzw. Ersatzteillagerung so wie bei der Instandhaltung ermöglicht.

Durch die in den Unteransprüchen aufgeführten Maßnahmen sind vorteilhafte Weiterbildungen und Verbesserungen des im Hauptanspruch angegebenen Systems möglich. Besonders vorteilhaft ist eine Weiterbildung der Erfindung, bei welcher in einer rotierenden optischen Umlenkeinrichtung eine Aussparung derart vorgesehen ist, daß die Einblendung eines Temperaturnormals in den optischen Weg des Sensors möglich ist, ohne daß sich zwischen dem Temperaturnormal und dem Infrarotdetektor eine spiegelnde Oberfläche befindet. Dadurch wird vermieden, daß bei einer Verschmutzung einer derartigen Oberfläche die Temperaturstrahlung der Verschmutzung in die Messung des Temperaturnormals eingeht.

Gemäß einer anderen Weiterbildung ist die Umlenkeinrichtung mit einem Winkelgeber ausgerüstet, welcher der Auswertungseinrichtung die erforderliche Information darüber gibt, welches Bauteil des Schienenfahrzeuges gerade überprüft wird.

Eine andere Weiterbildung der Erfindung beinhaltet, daß das Temperaturnormal nacheinander verschiedene Temperaturen annehmen und somit zu einer Eichung der Kennlinie des Detektors verwendet werden kann.

Ausführungsbeispiele der Erfindung sind in der Zeichnung an Hand mehrerer Figuren dargestellt und in der nachfolgenden Beschreibung näher erläutert. Es zeigt:

Fig. 1  eine schematische Darstellung der räumlichen Anordnung eines erfindungsgemäßen Systems an einem Gleis,

Fig. 2  eine perspektivische Darstellung eines Radsatzes und verschiedene Meßachsen des Abtasters in Bezug auf die Positionen, z. B. $P_1$ und $P_2$ des Radsatzes,

Fig. 3  eine bei einem erfindungsgemäßen System verwendbare optische Umlenkeinrichtung,

Fig. 4  eine schematische Darstellung eines erfindungsgemäßen Systems,

Fig. 5  Diagramme von Signalen, welche bei dem System nach Fig. 4 auftreten,

Fig. 6  ein zweites Ausführungsbeispiel für eine Auswertungseinrichtung,

Fig. 7  Diagramme von bei der Einrichtung nach Fig. 6 auftretenden Signale und

Fig. 8  ein Ausführungsbeispiel für eine Auswertungseinrichtung mit einem Mikrocomputer.

Fig. 9:  ein Ausführungsbeispiel für ein Abtastergehäuse

Gleiche Teile sind in den Figuren mit gleichen Bezugszeichen versehen.

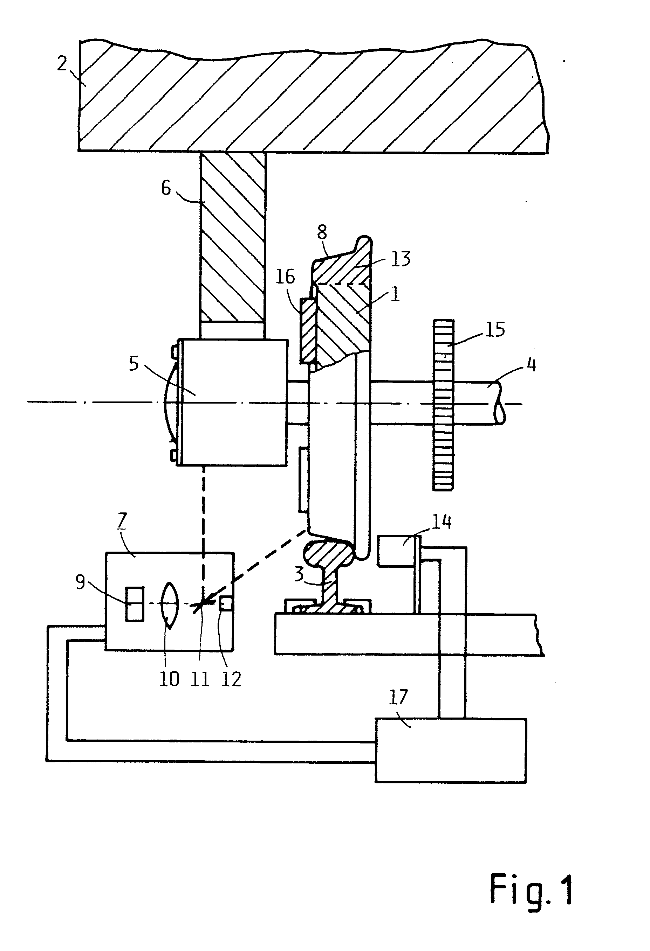

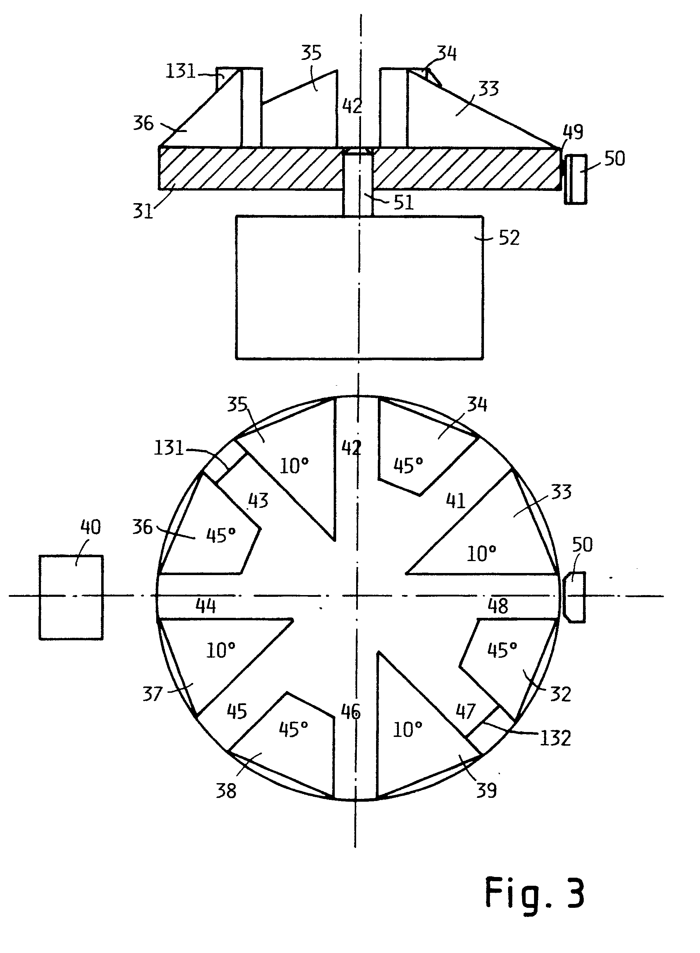

In Fig. 1 ist mit 1 das Rad eines Eisenbahnwagens 2 bezeichnet, das auf einer Schiene 3 läuft. Das Rad sitzt auf einer Achse 4, die in einem Lager 5 gelagert ist, das von einem Rahmen 6 gehalten wird. Seitlich der Schiene 3 ist ein Abtaster 7 angeordnet, der zum Erkennen von unzulässigen Erwärmungen des Lagers 5 und des Bereichs der Lauffläche 8 des Rades 1 dient. In dem stark vereinfacht dargestellten Abtaster 7 befindet sich ein IR-Sensor 9, eine Sammellinse 10, eine im Zusammenhang mit Fig. 3 näher erläuterte Umlenkeinrichtung 11 und ein Temperaturnormal 12. Die Umlenkeinrichtung 11 wird nun in schneller Folge derart angesteuert, das während eines ersten Zeitabschnitts die Strahlung des Temperaturnormals 12 zum IR-Sensor 9 gelangt, daß in einem zweiten Zeitabschnitt der IR-Sensor 9 die vom Radlager 5 ausgehende Strahlung erhält und daß in einem dritten Zeitabschnitt die Temperatur des Bereichs der Lauffläche 8 des Rades 1 gemessen wird. In diesem Zusammenhang wird noch vermerkt, daß die Lauffläche 8 des Rades 1 Teil eines einstückigen Rades sein kann, daß jedoch die Lauffläche 8 in anderen Fällen Teil eines Radkranzes 13 ist. Mit einem vorzugsweise induktiv arbeitenden Gleisschalter 14 wird festgestellt, wann sich das Rad 1 in einer zur Messung geeigneten Position befindet.

Bei Eisenbahnwagen, welche an der Lauffläche des Rades mit Bremsklötzen gebremst werden, wird zweckmäßigerweise zur Überwachung der Bremsen die Temperatur der Lauffläche überwacht. Andere Eisenbahnwagen sind jedoch mit Scheibenbremsen ausgerüstet, welche entweder innenliegende Bremsscheiben 15 oder außen auf dem Rad angeordnete Bremsscheiben 16 aufweisen. Diese können durch Änderung des Umlenkwinkels der Umlenkeinrichtung 11 bzw. Einführung eines zusätzlichen Umlenkwinkels ebenfalls überwacht werden. Dieses gilt ohne weiteres für die außenliegenden Scheibenbremsen, während bei den innenliegenden Scheibenbremsen eine Schrägstellung des Abtasters 7 erforderlich ist, um zu einem geeigneten Zeitpunkt am Rad 1 vorbei auf den Rand der Bremsscheibe 15 "sehen" zu können.

In Fig. 1 ist lediglich eine Seite des Eisenbahnwagens mit einem Rad 1 und mit einem Lager 5 dargestellt. Der Vollständigkeit halber sei noch erwähnt, daß auf der anderen Seite des Gleises ebenfalls eine Abtasteinrichtung und ein Gleisschalter 14 angeordnet sind, welche jedoch nicht dargestellt sind.

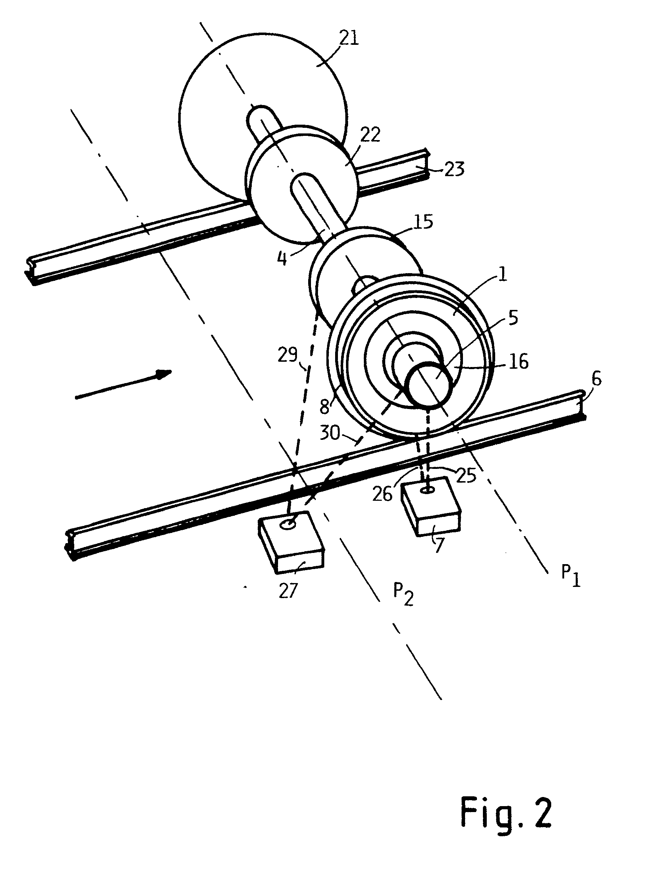

Zur Veranschaulichung der geometrischen Verhältnisse ist in Fig. 2 ein Radsatz mit zwei Rädern 1, 21, welche auf einer Achse 4 sitzen, dargestellt. Von den beiden Lagern ist lediglich das Lager 5 zu erkennen. Außerdem sind auf der Achse zwei Bremsscheiben 15, 22 angeordnet. Alternativ dazu kann an jedem Rad außen eine Bremsscheibe 16 angeordnet sein. Die Räder 1 und 21 laufen auf zwei Schienen 6 und 23, welche mit Hilfe von nicht dargestellten Schwellen zu einem Gleis verbunden sind.

Der Abtaster 7 ist bei der Anordnung nach Fig. 2 gegenüber der Schiene nicht im Winkel von 90° angeordnet. Diese Verdrehung hat in der Meßachse 25 keinen Einfluß. Die Änderung der für die Überwachung der Temperatur des Bereichs der Lauffläche 8 vorgesehenen Meßachse 26 beeinflußt das Ergebnis praktisch auch nicht.

Die Verdrehung des Abtasters 7 ermöglicht jedoch, die Temperatur der Bremsscheibe 15 zu überwachen, wenn das Rad 1 etwas weitergerollt ist. Der Einfachheit halber wurde diese Bewegungsphase in Fig. 2 dadurch dargestellt, daß ein zweiter Abtaster 27 entgegen der durch einen Pfeil gekennzeichneten Fahrtrichtung angeordnet ist. Dieser trifft mit seiner Meßachse 28 auf die Umfangsfläche 29 der Bremsscheibe 15. Je nach Ausführung der im Abtaster 7, 27 angeordneten Umlenkeinrichtung 11 (Fig. 1) kann aus der Stellung des Abtasters 27 in einer weiteren Meßachse 30 die Temperatur der Rückseite des Lagers 5 erfaßt werden, was zur Überwachung von Gleitlagern erforderlich ist.

Die Meßachsen 25, 26 und 28 liegen in einer Ebene, welche die durch das Gleis gebildete Ebene senkrecht schneidet. Die Meßachse 30 liegt jedoch außerhalb dieser Ebene. Dieses bedingt eine Umlenkeinrichtung 11 (Fig. 1), welche eine Umlenkung in zwei Ebenen ermöglicht. Sollte bei einer praktischen Ausführung des erfindungsgemäßen Systems eine Umlenkeinrichtung verwendet werden, welche in nur einer Ebene den IR-Strahl umlenkt, so kann der Abtaster 7 nicht nur in der Gleisebene sondern auch noch in der durch das Rad 1 gebildeten Ebene gedreht werden. Eine solche Drehung würde bezüglich der Meßachsen 25, 26 und 29 wenig Einfluß auf die Meßergebnisse haben, würde jedoch eine Überwachung der Temperatur der Rückseite des Lagers 5 ermöglichen - wenn auch unter einem ungünstigeren Winkel.

Wenn das erfindungsgemäße System auch die Überwachung aller obengenannten Bauteile ermöglicht, wird je nach Erfordernissen der betreffenden Eisenbahnverwaltung eine Kombination einiger der genannten Möglichkeiten bei den meisten praktischen Ausführungen in Frage kommen.

Die in Fig. 3 dargestellte Umlenkeinrichtung 11 besteht aus einer Scheibe 31, auf welcher Spiegel 32, 33, 34, 35, 36, 37, 38 und 39 aufgebracht sind. Die Oberflächen der Spiegel 32, 34, 36, 38 bilden mit der Ebene der Scheibe 31 jeweils einen Winkel von 45°, während die Oberflächen der Spiegel 33, 35, 37 und 39 einen Winkel von jeweils 10° aufweisen. Bei einer weiteren Ausführungsform des Spiegelrades sind weitere Spiegel 131, 132 vorgesehen, welche eine Spiegelung des IR-Sensors in sich selbst bewirken. Damit wird der IR-Sensor gleichzeitig als Temperaturnormal benutzt.

Zur Halterung der Spiegel in dem jeweils erforderlichen Winkel zur Scheibe 31 sind tetraederförmige Tragkörper vorgesehen, von denen in Fig. 3 lediglich diejenigen sichtbar sind, welche für die Spiegel 33, 34, 35 und 36 vorgesehen sind. Die Tragkörper für die Spiegel können vorzugsweise einstückig mit der Scheibe 31 hergestellt werden. Bei der Wahl des Werkstoffes sind einerseits die Umweltbedingungen, denen ein Abtaster ausgesetzt ist, und andererseits die hohe Umdrehungszahl der Umlenkeinrichtung zu berücksichtigen.

Letzteres erfordert ein geringes Gewicht und eine hohe Festigkeit. Gegebenenfalls können in dem von den Tragkörpern und der Scheibe 31 gebildeten Teil entsprechende Hohlräume vorgesehen sein.

Zwischen den Spiegeln bzw. Tragkörpern befinden sich Aussparungen 41, 42, 43, 44, 45, 46, 47 und 48, so daß für bestimmte Drehwinkel der Scheibe 31 keine Umlenkung des IR-Strahls erfolgt. Dadurch wird ermöglicht, daß zwischen jeweils zwei aufeinander folgenden Temperaturmessungen ein Temperaturnormal 40 abgetastet wird. Eine dadurch erfolgende Abtastung ohne eine Umlenkung durch einen Spiegel hat insbesondere Vorteile bei der Abtastung eines Temperaturnormals mit einer geringen Temperatur von beispielsweise -30 °C. Es kann dann keine von einer Verschmutzung des Spiegels ausgehende Wärmestrahlung das Meßergebnis verfälschen.

Am Umfang der Scheibe 31 sind vorzugsweise magnetische Markierungen 49 angeordnet, welche zusammen mit einem entsprechenden Sensor 50 einen Winkelgeber darstellen. Mit Hilfe dieses Winkelgebers können, wie später noch genauer erläutert wird, Impulse an eine Auswertungseinrichtung gegeben werden. Zum Antrieb ist die Scheibe 31 auf der Welle 51 eines Motors 52 angeordnet.

Die in Fig. 3 dargestellte Umlenkeinrichtung kann im Rahmen des Fachmännischen in vielfacher Weise weitergebildet oder abgeändert werden. So kann beispielsweise der Umfang der Scheibe 31 die Form eines durch die Kanten der Spiegel 32 bis 39 gebildeten Polygons aufweisen. Wobei dann zweckmäßigerweise die Codierung entweder auf der unteren Fläche der Scheibe 31 anzuordnen oder für diesen Zweck eine weitere Scheibe vorzusehen wäre.

Eine weitere Variante der Umlenkeinrichtung besteht darin, daß von den in Fig. 3 gezeigten Aussparungen 41 bis 48 lediglich jede zweite Aussparung, also beispielsweise 42, 44, 46, 48, vorgesehen ist, wobei die Fläche der Spiegel 32 bis 39 größer ist. Dadurch ergibt sich eine größere Verweildauer der Meßachse bei dem jeweiligen zu überwachenden Bauteil. Außerdem wird dadurch auch ohne die Verwendung eines Winkelgebers eine Kennzeichnung der einzelnen Zeitabschnitte ermöglicht. Voraussetzung ist jedoch, daß das Temperaturnormal eine Temperatur aufweist, welche außerhalb des Meßbereichs des erfindungsgemäßen Systems ist, so daß aus dem mit Hilfe des IR-Sensors gewonnenen Signal durch Amplitudendiskrimination ein den Drehwinkel kennzeichnendes Signal gewonnen werden kann.

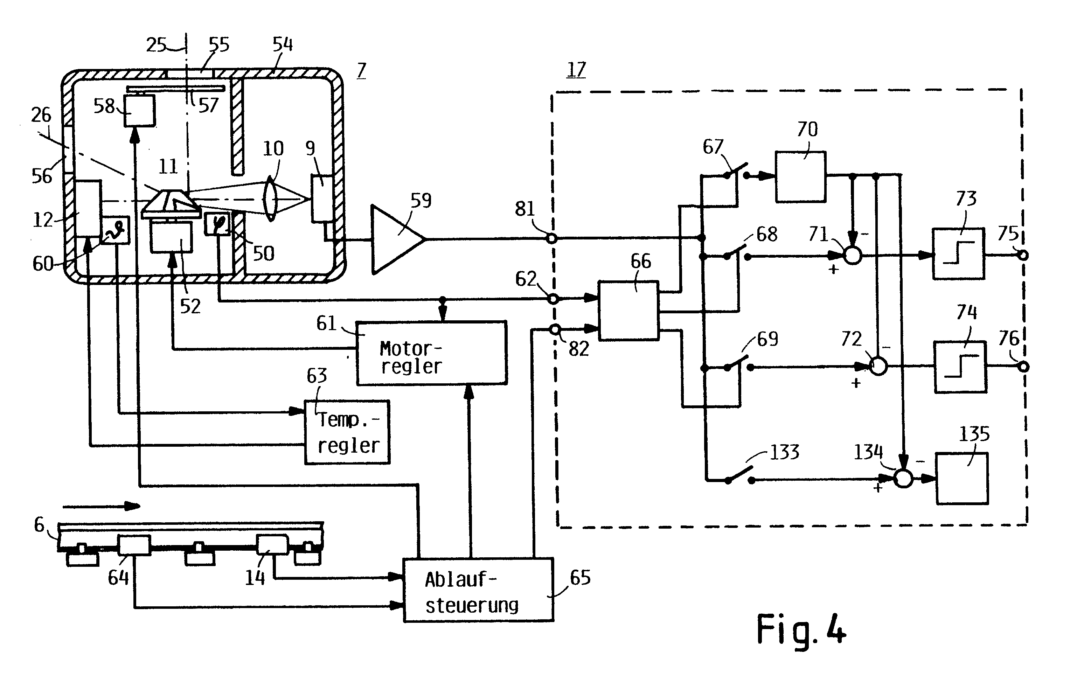

Fig. 4 stellt schematisch einen Abtaster 7 sowie eine Auswertungseinrichtung 17 dar. Dabei wird darauf hingewiesen, daß der Abtaster 7 und die Auswertungseinrichtung 17 nicht in jedem Fall zwei räumlich getrennte Einheiten darstellen, sondern daß beispielsweise die Auswertungseinrichtung 17 durchaus im Gehäuse 55 der Abtasteinrichtung 7 angeordnet sein kann oder daß für mehrere Abtaster Auswertungseinrichtungen gemeinsam in einem Gehäuse angeordnet sein können, wobei wiederum Teile der Auswertungseinrichtungen gegebenenfalls für mehrere Abtaster nur einmal vorhanden zu sein brauchen.

Das Gehäuse 54 des Abtasters 7 weist zwei Eintrittsöffnungen 55, 56 auf. Die nach oben gerichtete Eintrittsöffnung 55 ist durch eine Klappe 57, welche mit Hilfe eines Elektromagneten 58 betätigt werden kann, verschließbar.

Die durch die Öffnungen 55 und 56 aus den Meßachsen 25, 26 eintretende IR-Strahlung wird von der Umlenkeinrichtung 11 zur Linse 10 und zum IR-Sensor 9 geleitet. Die Umlenkeinrichtung 11 kann auch gegenüber der gezeigten Lage geneigt angeordnet sein, so daß Schmutz, welcher durch die Öffnungen 55 und 56 eintritt und auf die Umlenkeinrichtung 11 fällt, nicht auf die Linse 10 geschleudert wird. Damit im Falle der Schrägstellung ein ungehindertes Durchtreten des IR-Strahls vom Temperaturnormal 12 zum IR-Sensor möglich ist, können auch in der Scheibe Aussparungen vorgesehen sein.

Die vom IR-Sensor 9 erzeugten elektrischen Signale werden in einem Verstärker 59 verstärkt und zur Auswertungseinrichtung 17 geleitet.

Die Drehzahl des Motors 52 wird mit Hilfe eines Motorreglers 61 geregelt, wobei als Ist-Wert das Ausgangssignal des Winkelgebers 50 verwertet wird. Außerdem wird das Ausgangssignal des Winkelgebers 50 zum Schaltungspunkt 62 geleitet. Die Temperatur des Temperaturnormals 12 wird mit Hilfe eines Temperaturreglers 63 geregelt, welchem als Ist-Wert das Ausgangssignal eines Temperatursensors 60 zugeführt wird.

An der Schiene 6 sind zwei Gleisschalter 64, 14 angeordnet, welche mit einer Schaltung 65 in Verbindung stehen, die den zeitlichen Ablauf der im folgenden beschriebenen Vorgänge steuert. Der Schalter 64 ist in Fahrtrichtung gesehen soweit vor dem Schalter 14 angeordnet, daß bei dem Erreichen des ersten Radsatzes eines Zuges noch genügend Zeit zur Aktivierung des erfindungsgemäßen Systems verbleibt. So wird - durch den Schalter 64 ausgelöst - von der Ablaufsteuerung 65 der Elektromagnet 58 mit Strom versorgt, so daß die Öffnung 56 von der Klappe 57 freigegeben wird. Ferner wird durch entsprechende Ansteuerung des Motorreglers 68 der Motor 52 und damit die Umlenkeinrichtung 11 in Betrieb gesetzt.

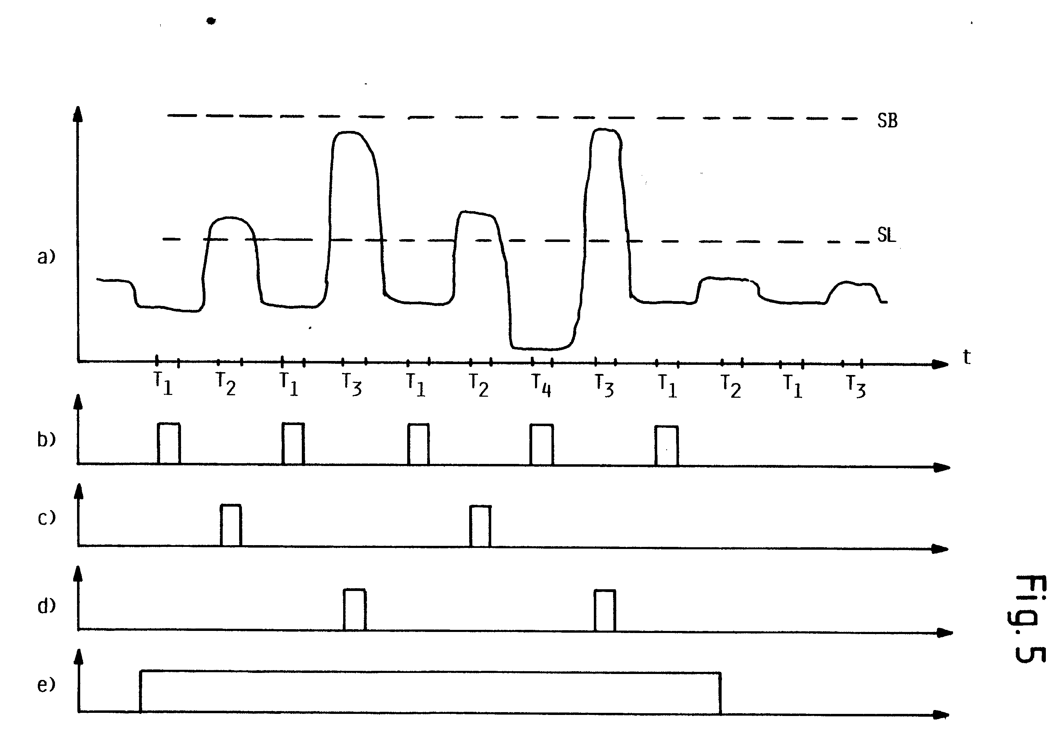

Der durch den Schalter 64 ausgelöste Betriebszustand des erfindungsgemäßen Systems bleibt solange erhalten, bis die letzte Achse des Zuges an dem Abtaster vorbeigerollt ist. Beim Vorbeirollen jedes Radsatzes am Schalter 14 wird von der Ablaufsteuerung ein Impuls an eine Verknüpfungsschaltung 66 weitergeleitet, dessen Dauer das Abtasten der zu überwachenden Bauteile umfaßt. Der Impuls stellt somit ein Zeitfenster für die Überwachung dar. Er wird mit den Ausgangssignalen des Winkelgebers 50 in der Schaltung 66 verknüpft, was im Zusammenhang mit Fig. 5 noch näher erläutert wird.

Die Ausgangssignale der Schaltung 66 steuern dann nacheinander die elektronischen Schalter 67, 68, 69 und 133 in den leitenden Zustand, wobei der Schalter 67 während der Erfassung des Temperaturnormals 12 geschlossen ist. Die der Temperatur des Temperaturnormals 12 entsprechende Spannung wird in einer Abtastund Halteschaltung (sample and hold) 70 kurzzeitig gespeichert und von den den Temperaturen der zu überwachenden Bauteile entsprechenden Spannungen mit Hilfe der Subtraktionsschaltungen 71 und 72 subtrahiert, so daß an den Ausgängen der Subtraktionsschaltungen 71 und 72 Spannungen zur Verfügung stehen, welche den Differenzen zwischen den Temperaturen der zu überwachenden Bauteile und des Temperaturnormals entsprechen. Diese Spannungen werden Schwellwertschaltern 73 und 74 zugeführt, so daß bei Überschreitung der jeweils zulässigen Temperatur ein Warnsignal an den Ausgängen 75 und 76 zur Verfügung steht.

Der Schalter 133 ist geschlossen, wenn einer der Spiegel 131 und 132 (Fig. 3) den IR-Strahl um 180° umlenkt. Dann wird aus der Temperatur des Temperaturnormals 12 und der Temperatur des IR-Sensors in der Schaltung 134 die Differenz gebildet. Die entsprechende Spannung wird einer Auswertungsschaltung 135 zugeführt und kann beispielsweise zur Korrektur der Schwellwerte der Schaltungen 73 und 74 herangezogen werden.

In diesem Zusammenhang sei darauf hingewiesen, daß die dargestellte Auswertung mit lediglich einem Schwellwertschalter je zu überwachendem Bauteil eine sehr einfache Form der Überwachung darstellt. Es sind jedoch auch wesentlich verfeinerte Formen möglich. So können beispielsweise die Temperaturen der zu überwachenden Bauteile registriert und mit denen bei der Vorbeifahrt desselben Zuges bei dem folgenden Abtaster verglichen werden. Es können ferner mehrere Schwellen je zu überwachendem Bauteil vorgesehen werden. Die Überschreitung der niedrigeren Schwelle kann dann beispielsweise eine Registrierung des betreffenden Bauteils (z. B. "rechtes Lager der x-ten Achse des Zuges Nr. y") bewirken, worauf bei der nächsten Überwachungseinrichtung bei weiterem Anstieg der Temperatur Alarm gegeben wird.

Das Diagramm in Fig. 5a stellt den zeitlichen Verlauf der Ausgangssignale des Verstärkers 59 bei Verwendung der in Fig. 3 gezeigten Umlenkeinrichtung dar. In den mit $T_1$ bezeichneten Zeitabschnitten wird jeweils das Temperaturnormal 12 (Fig. 4) abgetastet. Es weist eine gegenüber der Umgebung und gegenüber den zu überwachenden Bauteilen geringere Temperatur auf. Während der mit $T_2$ bezeichneten Abschnitte werden die Radlager 5 (Fig. 1) abgetastet, während in den mit $T_3$ bezeichneten Zeitabschnitten die Temperatur im Bereich der Lauffläche des Rades ermittelt wird. Zwischen den genannten Zeitabschnitten entstehen Signalübergänge durch das Ein- und Austreten der Spiegel 32 bis 39 (Fig. 3) in den bzw. aus dem Strahlengang. Diese Übergänge sind zu einer Auswertung nicht geeignet und werden durch die nachfolgende Schaltung auch nicht weitergeleitet.

Während des Zeitabschnitts $T_4$ befindet sich einer der Spiegel 131 und 132 (Fig. 3) im Strahlengang. Die Differenz der Temperaturen während $T_4$ und $T_1$ wird, wie im Zusammenhang mit Fig. 4 beschrieben, ausgewertet.

Die Zeilen b), c) und d) der Fig. 5 stellen die den Schaltern 67, 68 und 69 von der Verknüpfungsschaltung 66 zugeführten Impulse dar. Während des Auftretens dieser Impulse ist der jeweilige Schalter im leitenden Zustand. In Zeile e) ist dann noch der von der Ablaufsteuerung 60 der Verknüpfungsschaltung 66 zugeführte Impuls dargestellt. Außerhalb dieses Impulses sind die in den Zeilen b) bis d) gezeigten Impulse gesperrt, so daß eine Weiterleitung des Ausgangssignals des Verstärkers 59 dann unterbleibt.

Die während der Zeitabschnitte $T_2$ auftretenden Signale gehen über die Schwelle SL hinaus, was bedeutet, daß das Lager des gerade vorbeirollenden Rades zu heiß ist. Die Signale in den Zeitabschnitten $T_3$ erreichen die Schwelle SB nicht, da die Temperatur des Radkranzes niedriger als die zulässige Temperatur ist.

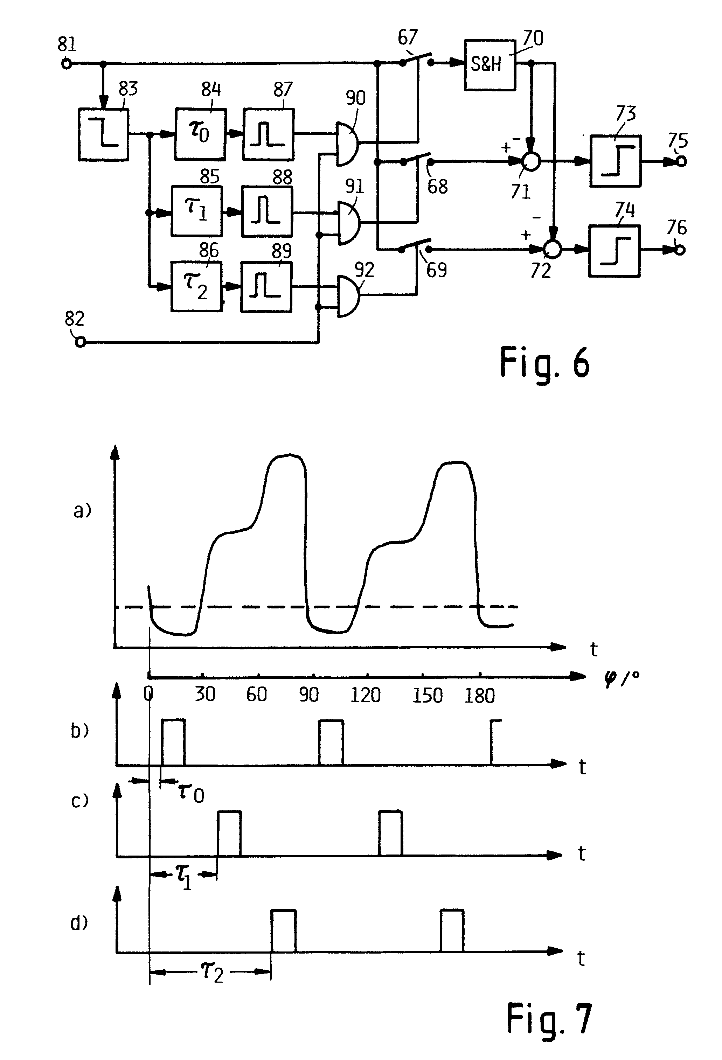

Es ist nicht erforderlich, zwischen jeweils zwei Messungen der Bauteil-Temperatur eine Messung des Temperaturnormals vorzunehmen, wozu bei einem Spiegelrad weniger Aussparungen als bei dem in Fig. 3 gezeigten Spiegelrad vorzusehen sind. Bei der in Fig. 6 gezeigten Ausführungsform einer Auswertungseinrichtung wird eine Umlenkeinrichtung vorausgesetzt, die im Gegensatz zur Umlenkeinrichtung nach Fig. 3 derart ausgestaltet ist, daß auf eine Messung des Temperaturnormals 12 eine Messung in Richtung 25 (Fig. 2) folgt, worauf sich eine Messung in Richtung 26 anschließt und dann schließlich wieder das Temperaturnormal 12 gemessen wird. Ferner wird vorausgesetzt, daß das Temperaturnormal eine Temperatur aufweist, welche mit Sicherheit unter denen in den Richtungen 25 und 26 gemessenen Temperaturen liegt. Die Schaltung nach Fig. 6 tritt anstelle der Auswertungseinrichtung 17 (Fig. 4) und ist über die Schaltungspunkte 81 und 82 mit dem Ausgang des Verstärkers 59 und der Ablaufsteuerung 65 verbunden.

Wie bei der Anordnung nach Fig. 4 wird das Ausgangssignal des Verstärkers 59 drei Schaltern 67, 68 und 69 zugeführt. Das der Temperatur des Temperaturnormals 12 entsprechende Signal wird in der Schaltung 70 vorübergehend gespeichert und von den die Temperaturen der zu überprüfenden Bauteile repräsentierenden Signalen in den Subtraktionsschaltungen 71 und 72 subtrahiert. Die somit gebildeten Differenzen werden dann über die Schwellwertschalter 73 und 74 den Ausgängen 75 und 76 zugeführt.

Die Schaltungsanordnung nach Fig. 6 unterscheidet sich jedoch bezüglich der Steuerung der Schalter 67, 68 und 69 von der Auswertungseinrichtung 17 (Fig.4). Mit Hilfe einer Schwellwertschaltung oder eines Amplitudendiskriminators 83 wird nämlich von den Ausgangssignalen des Verstärkers 59 (Fig. 4) der Amplitudenbereich abgetrennt, welcher der Temperatur des Temperaturnormals 12 entspricht. Aus dem abgetrennten Signal werden dann wie folgt Impulse zur Steuerung der Schalter 67, 68 und 69 abgeleitet: Zunächst wird das Ausgangssignal des Amplitudendiskriminators 83 drei Verzögerungsschaltungen 84, 85 und 86 zugeführt, an welche sich Impulsformer 87, 88 und 89 anschließen. Damit die Auswertung der vom Sensor 9 (Fig. 1) erzeugten Signale nur während der Zeit erfolgt, wenn die zu überwachenden Bauteile sich in der richtigen Position befinden, wird der von der Ablaufsteuerung 65 (Fig. 4) über den Schaltungspunkt 82 zugeführte Impuls mit Hilfe dreier UND-Schaltungen 90, 91 und 92 mit den Ausgangssignalen der Impulsformer 87, 88 und 89 verknüpft. Die Ausgangssignale der UND-Schaltungen werden dann den Steuereingängen der Schalter 67, 68 und 69 zugeführt.

Die in Fig. 7 gezeigten Diagramme stellen die zeitlichen Vorgänge in der Schaltungsanordnung nach Fig. 6 dar. Zeile a) der Fig. 7 zeigt den Verlauf der Ausgangsspannung des Verstärkers 59. Die gestrichelte Linie deutet die Schwelle des Amplitudendiskriminators 83 an. Zur Erzeugung des in Zeile b) dargestellten Impulses wird das Ausgangssignal des Amplitudendiskriminators 83 nur wenig verzögert, während die Verzögerungszeiten für die in den Zeilen c) und d) dargestellten Impulse größer sind. Zur Verdeutlichung ist außer der Zeitachse noch eine weitere Achse in den Diagrammen nach Fig. 7 dargestellt, welche den Drehwinkel der Umlenkeinrichtung 11 bedeutet.

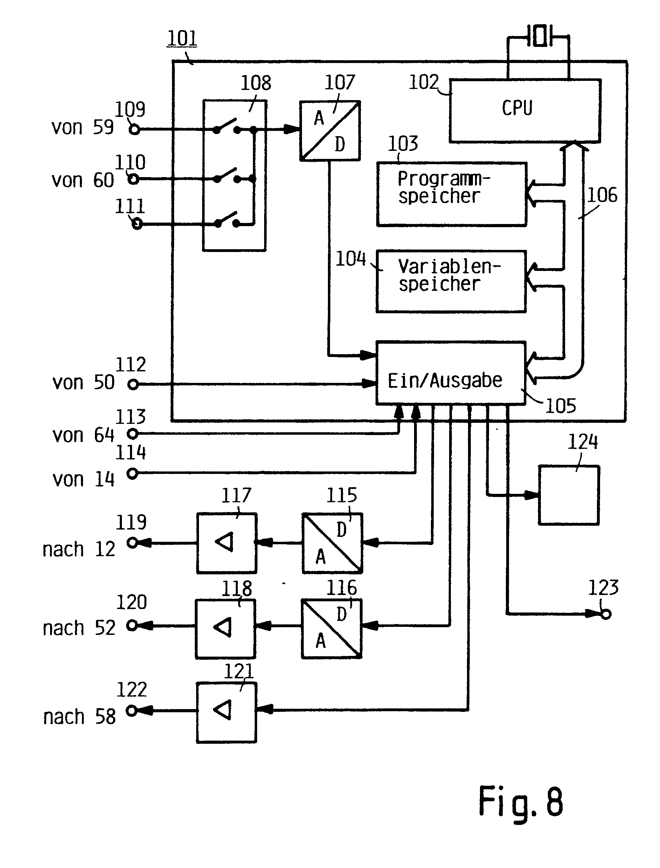

Die Schaltungsanordnung nach Fig. 8 tritt an die Stelle der Auswertungseinrichtung 17 (Fig. 4) einschließlich des Motorreglers 61, des Temperaturreglers 63 und der Ablaufsteuerung 65. Durch die Verwendung eines Mikrocomputers 101 werden weitere Funktionen ermöglicht, welche bei den Schaltungen nach Fig. 4 und 6 mit vertretbarem Aufwand kaum realisierbar sind.

Der Mikrocomputer 101 ist ein sogenannter Ein-Chip-Mikrocomputer und besteht im wesentlichen aus einer Zentraleinheit 102, einem Programmspeicher 103, einem Daten-Speicher 104 und einer Ein/Ausgabeeinheit 105, welche über ein Bussystem 106 miteinander verbunden sind.

Ferner beinhaltet der Mikrocomputer 101 einen Analog-Digital-Wandler 107, dessen Eingang ein Multiplexer 108 vorgeschaltet ist, so daß drei Analog-Signale reihum abgetastet und in Digital-Signale umgewandelt werden können. Bei der Anordnung nach Fig. 8 werden zwei Analog-Eingänge 109, 110 zur Eingabe des die Temperatur darstellenden Ausgangssignals des Verstärkers 59 und des Temperatursensors 60 des Temperaturnormals (Fig. 4) verwendet. An einen weiteren Analog-Eingang 111 kann beispielsweise ein die Umgebungstemperatur messender Sensor angeschlossen werden

Vom Winkelgeber 50 wird dem Mikrocomputer über den Eingang 112 in codierter Form die Stellung der Umlenkeinrichtung 11 zugeführt. Außerdem gelangen die von den Gleisschaltern 64 und 14 erzeugte Impulse an die Eingänge 113 und 114. Über jeweils einen Digital-Analog-Wandler 115, 116 und einen Leistungsverstärker 117, 118 steuert der Mikrocomputer 101 die Heizung bzw. Kühlung des Temperaturnormals 12 und den Motor 52. Zur Heizung bzw. Kühlung des Temperaturnormals 12 kann ein Peltierelement dienen, was an den Ausgang 119 angeschlossen wird. Der Motor 52 ist mit dem Ausgang 120 verbunden.

Schließlich gibt der Mikrocomputer 101 noch ein Signal zum Öffnen der Klappe 57 an den Magneten 58 über den Leistungsverstärker 121 und den Ausgang 122.

Am Ausgang 123 der Anordnung nach Fig. 8 stehen Signale, welche die Überwachungsergebnisse repräsentieren, zur Verfügung. Die Signale am Ausgang 123 können in einem standardisierten Datenformat vorliegen, welches zur Datenfernübertragung, zur Registrierung oder zur weiteren Auswertung in einem Computer geeignet ist.

Um Daten auch über eine Unterbrechung der Stromversorgung hinaus speichern zu können, ist ein nichtflüchtiger Speicher 124 vorgesehen. Da die Anordnung nach Fig. 8 neben anderem auch die Funktion der Anordnung nach Fig. 4 erfüllt, erübrigt sich eine Beschreibung dieser Funktion. Durch die Zuführung einer der Außentemperatur analogen Spannung bei 111, kann der Wert der Außentemperatur noch in die Auswertung einbezogen werden. So können beispielsweise die höchst zulässigen Werte für die Lager- bzw. Radtemperatur je nach Außentemperatur höher oder niedriger festgelegt werden.

Die bei dem erfindungsgemäßen System verwendeten Sensoren weisen eine nichtlineare Intensitäts/Spannungs-Kennlinie auf, welche außerdem von Exemplar zu Exemplar streut. Außerdem treten Alterungserscheinungen auf und es sind Verschmutzungen der Spiegel zu berücksichtigen. Mit Hilfe eines dafür vorgesehenen Programmteils kann nun der Mikrocomputer 101 bei Bedarf Korrekturwerte für die Kennlinie ermitteln und abspeichern, welche dann bei der Auswertung berücksichtigt werden. Diese "Selbsteichung" erfolgt dadurch, daß das Temperaturnormal nacheinander auf verschiedene Temperaturwerte gebracht wird. Durch Vergleich des von dem Sensor 60 ermittelten Temperaturwertes mit dem Ausgangssignal des Sensors 9 bzw. des Verstärkers 59 werden die Korrekturwerte dann für jeden der Temperaturwerte ermittelt und abgespeichert. Bei der Verwendung der Korrekturwerte kann dann für Zwischenwerte eine Interpolation erfolgen. Wegen der Trägheit des Temperaturnormals 12 benötigt die beschriebene Ermittlung der Korrekturwerte eine nicht zu vernachlässigende Zeit, so daß sie falls erforderlich unmittelbar nach der Vorbeifahrt eines Zuges erfolgen sollte.

Selbst wenn nur eine Meßachse erforderlich ist, kann eine Umlenkeinrichtung nach Fig. 3 vorteilhaft in einem Abtaster angewendet werden. So kann beispielsweise ein Temperaturnormal durch die Aussparungen der Umlenkeinrichtung mit Hilfe der Umlenkung durch die steil gestellten Spiegel ein Meßobjekt und mit Hilfe der Umlenkung durch die anderen Spiegel ein weiteres Temperaturnormal gemessen werden, welches eine von dem bereits erwähnten Temperaturnormal abweichende Temperatur aufweist.

Dadurch, daß gegenüber bekannten Vorrichtungen zum Erkennen unzulässig erwärmter Bauteile an fahrenden Schienenfahrzeugen bei dem erfindungsgemäßen System nur wenige mechanisch-optische Bauelemente verwendet werden, ist ein besonders kompakter Aufbau des Abtasters 7 möglich. Dadurch ergeben sich wiederum zusätzliche Freiheitsgrade bei der Gestaltung des Gehäuses 54 (Fig. 4). Dieses kann somit nach strömungstechnischen Gesichtspunkten gestaltet werden, was sich beispielsweise günstig auf die Reinhaltung der Öffnungen 55, 56 auswirkt.

Bei bekannten Systemen zum Erkennen unzulässig erwärmter Bauteile an Schienenfahrzeugen ist im Strahlengang ein optischer Zerhacker, vorzugsweise eine entsprechend ausgestaltete Stimmgabel, angeordnet. Eine derartige Vorrichtung kann je nach Erfordernissen bei dem erfindungsgemäßen System vorgesehen werden.

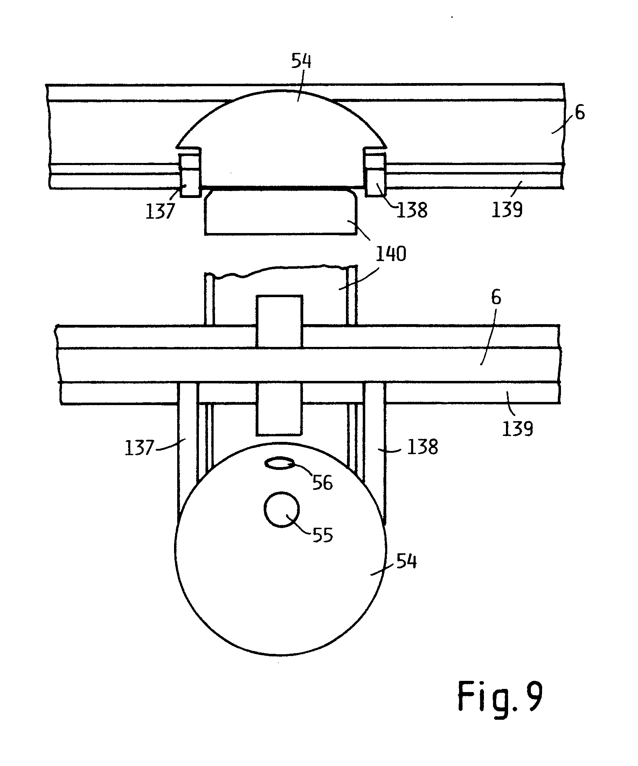

Fig. 9 zeigt ein Ausführungsbeispiel für ein Gehäuse 54 eines Abtasters 7 eines erfindungsgemäßen Systems in zwei Ansichten. Das Gehäuse 54 ist aufgrund seiner Form nur geringfügigen Verschmutzungen ausgesetzt. Es ist mit zwei Halterungen 137 und 138 an dem Schienenfuß 139 oberhalb einer Schwelle 140 befestigt. Durch die beiden Öffnungen 55 und 56 wird die Strahlung der zu überwachenden Bauteile gemessen

**Patentansprüche**

1. System zum Erkennen unzulässig erwärmter Bauteile an fahrenden Schienenfahrzeugen, mit einem am Eisenbahngleis stationär angeordneten Abtaster für Infrarotstrahlung und nachgeschalteter Auswertungseinrichtung, sowie Gleisschaltmitteln zur Aktivierung des Abtasters, wobei der Abtaster (7) derart am Eisenbahngleis (3) angeordnet ist, daß mehrere verschiedene zu überwachende Bauteile (5, 8, 15, 16) nacheinander erfaßt werden, und wobei mit Hilfe der Auswertungseinrichtung (17) einzelne den jeweiligen Bauteilen (5, 8, 15, 16) zugeordnete Zeitabschnitte der von einem im Abtaster (7) angeordneten IR-Sensor (9) erzeugten Signale nach den jeweiligen durch die Art der Bauteile (5, 8, 15, 16) gegebenen Erfordernissen ausgewertet werden, dadurch gekennzeichnet, daß der Abtaster (7) über voreingestellte Meßachsen verfügt, daß die zu überwachenden Bauteile (5, 8, 15, 16) durch die Bewegung des Schienenfahrzeuges (2) nacheinander in die Meßachsen des Abtasters (7) durchfahren und daß zur Festlegung der Zeitabschnitte nur ein Gleisschaltmittel mit entsprechender Schaltlänge vorgesehen ist, das zählbare Signale abgibt, wobei, auf jeder Seite des Gleises, nur ein Abtaster für verschiedene voreingestellte Meßachsen erforderlich ist.

2. System nach Anspruch 1, dadurch gekennzeichnet, daß im Strahlengang des Abtasters (7) eine rotierende Umlenkeinrichtung (11) derart angeordnet ist, daß der Abtaster (7) nacheinander in verschiedenen Meßachsen (25, 26, 29, 30) wirksam ist.

3. System nach Anspruch 2, dadurch gekennzeichnet, daß die Umkehreinrichtung derart schnell rotiert, daß die Frequenz der Aktivierung einer jeden Meßachse eine mehrfache Abtastung jedes der zu überwachenden Bauteile bei einer Vorbeifahrt auch bei größtmöglicher Geschwindigkeit ermöglicht.

4. System nach Anspruch 2, dadurch gekennzeichnet, daß die Umlenkeinrichtung (11) von einer Scheibe (31) gebildet wird, auf welcher Spiegel (32 bis 39) angeordnet sind, welche mit der Ebene der Scheibe (31) Winkel bilden, deren Scheitel im Bereich der Umfangslinie der Scheibe liegen und welche in Richtung auf die Drehachse offen sind, und daß die Winkel für verschiedene Meßachsen verschieden groß sind.

5. System nach Anspruch 4, dadurch gekennzeichnet, daß die Spiegel auf der Scheibe derart angeordnet sind, daß mindestens in einer Stellung der Umlenkeinrichtung der Strahlengang um 180° umgelenkt wird.

6. System nach Anspruch 5, dadurch gekennzeichnet, daß bei Umlenkung des Strahlenganges um 180° der IR-Sensor als Referenz dient.

7. System nach Anspruch 4, dadurch gekennzeichnet, daß die Spiegel (32 bis 39) auf der Scheibe (31) derart angeordnet sind, daß mindestens eine Aussparung (41 bis 48) gebildet ist, so daß mindestens in einer Stellung der Strahlengang nicht umgelenkt wird.

8. System nach Anspruch 7, dadurch gekennzeichnet, daß die Aussparung (9) auf der Umlenkeinrichtung ermöglicht, daß der IR-Sensor die Strahlung eines Temperaturnormals (12) als Referenz empfängt.

9. System nach Anspruch 7, dadurch gekennzeichnet, daß die Umlenkeinrichtung (11) auf einer Geraden zwischen einem IR-Sensor (9) und einem Temperaturnormal (12) angeordnet ist.

10. System nach Anspruch 6 und 8, dadurch gekennzeichnet, daß die Temperatur der Zelle und der Referenz unterschiedlich ist.

11. System nach Anspruch 10, dadurch gekennzeichnet, daß die Temperaturdifferenz des IR-Sensors und des Temperaturnormals (12) zu Eichzwecken benutzt wird.

12. System nach Anspruch 9, dadurch gekennzeichnet, daß das Temperaturnormal (12) von einem Körper gebildet wird, dessen Temperatur gleich oder geringer als die Umgebungstemperatur ist.

13. System nach Anspruch 9, dadurch gekennzeichnet, daß das Temperaturnormal (12) von einem Körper gebildet wird, dessen Temperatur mindestens der höchsten Temperatur entspricht, welche bei den zu überwachenden Bauteilen (5, 8, 15, 16) auftritt.

14. System nach Anspruch 9, dadurch gekennzeichnet, daß das Temperaturnormal (12) ein Körper ist, der durch geregelte Kühlung/Heizung nacheinander mehrere Temperaturwerte innerhalb eines vorgegebenen Temperaturbereichs einnimmt.

15. System nach Anspruch 4, dadurch gekennzeichnet, daß die Umlenkeinrichtung (11) mit einem Winkelgeber (49, 50) versehen ist, welcher elektrische Signale entsprechend dem jeweiligen Drehwinkel der Scheibe (31) erzeugt.

16. System nach Anspruch 7, dadurch gekennzeichnet, daß mit der rotierenden Umlenkeinrichtung (11) eine geeignete Codiereinrichtung (49, 50) verbunden ist, und daß jeder Spiegelfläche (32 bis 39) und den Aussparungen (41 bis 48) eine Codierung zugeordnet ist, die eine Zuordnung der Flächen bzw. Aussparungen zu in der Auswertungseinrichtung (17) angeordneten Schwellwertschaltern (67, 68, 69) ermöglicht.

17. System nach Anspruch 15, dadurch gekennzeichnet, daß die vom Winkelgeber (49, 50) erzeugten Signale zur Ableitung von Torsignalen herangezogen werden, welche zur zeitlichen Selektion der vom IR-Sensor (9) erzeugten Signale entsprechend den zu überwachenden Bauteilen (5, 8, 15, 16) dienen.

18. System nach Anspruch 1, dadurch gekennzeichnet, daß die Auswertungseinrichtung (17) mehrere nacheinander in den leitenden Zustand steuerbare elektronische Schalter (67, 68, 69) umfaßt.

19. System nach Anspruch 18, dadurch gekennzeichnet, daß Ansteuerimpulse für die elektronischen Schalter (67, 68, 69) aus den Ausgangssignalen der Gleisschaltmittel (14) abgeleitet werden.

20. System nach Anspruch 18, dadurch gekennzeichnet, daß Ansteuerimpulse für die elektronischen Schalter (67, 68, 69) aus Signalen abgeleitet werden, welche der Stellung einer Umlenkeinrichtung (11) im Strahlengang des Abtasters (7) entsprechen.

21. System nach Anspruch 17, dadurch gekennzeichnet, daß im Strahlengang des Abtasters (7) eine Umlenkeinrichtung (11) vorgesehen ist, welche in periodischer Folge ein Temperaturnormal (12) und ein oder mehrere zu überwachende Bauteile (5, 8, 15, 16) in die Meßachse des Abtasters (7) bringt, und daß Ansteuerimpulse für die elektronischen Schalter (67, 68, 69) aus den Ausgangssignalen des IR-Sensors (9) abgeleitet werden.

22. System nach Anspruch 1, dadurch gekennzeichnet, daß in der Auswertungseinrichtung (17) ein Mikrocomputer (101) vorgesehen ist.

23. System nach Anspruch 2, zur Erfassung der Temperatur von Gleit- und Rollenlagern, dadurch gekennzeichnet, daß die rotierende Umlenkeinrichtung (11) mindestens zwei Umlenkflächen unterschiedlicher Neigung hat und daß der Abtaster unterhalb des Radsatzlagers (5) des vorbeirollenden Eisenbahnrades (1) angeordnet ist und die Meßachse des Abtasters (7) zwischen der Lotrechten und einem Erhebungswinkel kleiner 45° parallel zur Schiene (3) in Fahrtrichtung pendelt.

24. System nach Anspruch 2 zur Erfassung der Temperatur von Radsatzlagern und Bremselementen (Radkranz, Bremsscheiben), dadurch gekennzeichnet, daß die rotierende Umlenkeinrichtung (11) Umlenkflächen unterschiedlicher Neigung hat und somit bei lotrechter Meßachse (25) die Temperatur eines Radsatzlagers und in Meßachse (26) mit einem Erhebungswinkel größer 5° die Temperatur eines Bremselementes erfaßt wird und daß der Abtaster (7) unterhalb des Radsatzlagers (5) des vorbeirollenden Eisenbahnrades (1) angeordnet ist und die Meßachse des Abtasters (7) zwischen der Lotrechten und einem Erhebungswinkel von 5° senkrecht und einem Winkel zur Gleisachse waagerecht pendelt.

**Claims**

1. System for identifying overheated structural parts of moving railway vehicles, with an infrared scanner and an exploitation device coupled downstream, as well as track switching means for activating the scanner, said scanner (7) being disposed on the railway track (3) so that several different structural parts (5, 8, 15, 16) to be monitored are successively detected, wheras, with the help of the exploitation device (17), individual time periods, attributed to the respective structural parts (5, 8, 15, 16), of the signals produced by an IR sensor (9) disposed in the scanner (7) are used depending on the respective requirements as a function of the kind of structural parts (5, 8, 15, 16), characterized in that the scanner (7) has pre-oriented axes of measurement so that the structural parts to be monitored (5, 8, 15, 16) travel successively in the axes of measurement of the scanner (7) through the movement of the railway vehicle (2) and in that, for determining the time periods, only one track switching means is provided with corresponding switching length, which produces countable signals, whereby only one scanner is required, on each side of the track, for different pre-oriented measurement axes.

2. System according to claim 1, characterized in that a rotating deflection device (11) is disposed in the path of the rays of the scanner (7) so that the scanner (7) is active successively in different measurement axes (25, 26, 29, 30).

3. System according to claim 2, characterized in that the deflection device rotates quickly so that the frequency of the activation of each measurement axis makes it possible a multiple scan of each of the structural parts to be monitored even when passing by at the greatest possible speed.

4. System according to claim 2, characterized in that the deflection device (11) is formed of a disk (31) on which mirrors (32 to 39) are disposed which form angles, with the plane of the disk, whose apices are situated in the vicinity of the circumference of the disk and which are open towards the rotational axis and in that the angles for different measurement axes are of different magnitudes.

5. System according to claim 4, characterized in that the mirrors are disposed on the disk so that, at least in one position of the deflection device, the path of the rays is deflected by 180°.

6. System according to claim 5, characterized in that during the deflection by 180° of the path of the rays, the IR sensor acts as reference.

7. System according to claim 4, characterized in that the mirrors (32 to 39) are so disposed on the disk (31) that at least one recess (41 to 48) is formed so that, at least in one position, the path of the rays is not deflected.

8. System according to claim 7, characterized in that the recess (9) on the deflection device makes it possible for the IR sensor to receive the radiation of a temperature standard (12) used as reference.

9. System according to claim 7, characterized in that the deflection device (11) is disposed on a straight line between an IR sensor (9) and a temperature standard (12).

10. System according to claims 6 and 8, characterized in that the temperature of the cell and of the reference is different.

11. System according to claim 10, characterized in that the temperature difference between the IR sensor and the temperature standard (12) is used for calibration purposes.

12. System according to claim 9, characterized in that the temperature standard (12) is formed of a body whose temperature is equal to or less than the surrounding temperature.

13. System according to claim 9, characterized in that the temperature standard (12) is formed of a body whose temperature corresponds to at least the highest temperature likely to occur on the structural parts (5, 8, 15, 16) to be monitored.

14. System according to claim 9, characterized in that the temperature standard (12) is a body which successively takes on several temperature values within a predetermined range of temperatures through controlled cooling/heating.

15. System according to claim 4, characterized in that the deflection device (11) is provided with an angle transmitter (49, 50) which produces electric signals corresponding to the respective angle of rotation of the disk (31).

16. System according to claim 7, characterized in that an appropriate coding device (49, 50) is coupled to the rotating deflection device (11) and in that a code is associated with each of the mirror surfaces (32 to 39) and of the recesses (41 to 48) for allocating the surfaces or recesses to threshold switches (67, 68, 69) disposed in the exploitation device (17).

17. System according to claim 15, characterized in that the signals produced by the angle transmitter (49, 50) are taken for deriving gating signals which serve for the selection in time of the signals produced by the IR sensor (9) corresponding to the structural parts (5, 8, 15, 16) to be monitored.

18. System according to claim 1, characterized in that the exploitation device (17) comprises several electronic switches (67, 68, 69) which are controllable to be successively brought in their conductive state.

19. System according to claim 18, characterized in that control pulses for the electronic switches (67, 68, 69) are derived from the output signals of the track switching means (14).

20. System according to claim 18, characterized in that control pulses for the electronic switches (67, 68, 69) are derived from signals which correspond to the position of a deflection device (11) in the path of the rays of the scanner (7).

21. System according to claim 17, characterized in that, in the path of the rays of the scanner (7), a deflection device (11) is provided which, in periodic succession, brings a temperature standard (12) and one or more structural parts to be monitored (5, 8, 15, 16) in the measurement axis of the scanner (7) and in that control pulses for the electronic switches (67, 68, 69) are derived from the output signals of the IR sensor (9).

22. System according to claim 1, characterized in that a microcomputer (101) is provided in the exploitation device (17).

23. System according to claim 3 for detecting the temperature of common and roller bearings, characterized in that the rotating deflection device (11) has at least two deflection surfaces of different slope and in that the scanner is disposed under the wheel bearing (5) of the passing railway wheel (1) and the measurement axis of the scanner (7) oscillates between the vertical and an angle of elevation less than 45° parallel to the rails (3) in the travel direction.

24. System according to claim 2 for detecting of the temperature of wheel bearings and brake elements (wheel rim, brake disks), characterized in that the rotating deflection device (11) has deflection surfaces of different slope whereby, with a vertical measurement axis (25), the temperature of a wheel bearing can be caught and, in a measurement axis (26) having an angle of elevation greater than 5° the temperature of a brake element can be caught, and in that the scanner (7) is disposed under the wheel bearing (5) of the passing railway wheel (1) and the measurement axis of the scanner (7) oscillates between the vertical and an elevational angle of 5° vertically and an angle to the track axis horizontally.

**Revendications**

1. Système pour reconnaître des éléments de structure surchauffés sur des véhicules ferroviaires en mouvement, comprenant un dispositif d'exploration à infrarouge et un dispositif d'exploitation connecté en aval, ainsi que des moyens de commutation de voie pour l'activation du dispositif d'exploration, le dispositif d'exploration (7) étant disposé sur la voie (3) pour permettre de détecter successivement plusieurs éléments de structure différents (5, 8, 15, 16) à surveiller, tandis que, à l'aide du dispositif d'exploitation (17), des intervalles de temps individuels, affectés aux éléments de structure respectifs (5, 8, 15, 16), des signaux émis par un détecteur à infrarouge (9) disposé dans le dispositif d'exploration (7) sont exploités suivant les besoins respectifs fonction de la nature des éléments de structure (5, 8, 15, 16), caractérisé en ce que le dispositif d'exploration (7) dispose d'axes de mesure pré-orientés de telle sorte que les éléments de structure à surveiller (5, 8, 15, 16) passent successivement dans les axes de mesure du dispositif d'exploration (7) par suite du déplacement du véhicule ferroviaire (2) et en ce que, afin de déterminer les intervalles de temps, un seul moyen de commutation de voie muni d'une longueur de commutation correspondante est prévu, qui délivre des signaux aptes à être comptés, un seul dispositif d'exploration étant, de chaque côté de la voie, nécessaire pour différents axes de mesure pré-orientés.

2. Système selon la revendication 1, caractérisé en ce qu'un dispositif déflecteur tournant (11) est disposé sur le trajet des rayons du dispositif d'exploration (7) pour que celui-ci soit actif successivement dans des axes de mesure différents (25, 26, 29, 30).

3. Système selon la revendication 2, caractérisé en ce que le dispositif déflecteur tourne rapidement pour que la fréquence d'activation de chaque axe de mesure rende possible un balayage multiple de chacun des éléments de structure à surveiller même lorsqu'ils passent à la vitesse la plus grande possible.

4. Système selon la revendication 2, caractérisé en ce que le dispositif déflecteur (11) se compose d'un disque (31) sur lequel sont disposés des miroirs (32 à 39) qui forment, avec le plan du disque des angles, dont les sommets se situent au voisinage de la circonférence du disque et qui s'ouvrent en direction de l'axe de rotation et en ce que les angles présentent des valeurs différentes pour des axes de mesure différents.

5. Système selon la revendication 4, caractérisé en ce que les miroirs sont disposés sur le disque de telle façon que, au moins pour une position du dispositif déflecteur, le trajet des rayons soit dévié de 180°.

6. Système selon la revendication 5, caractérisé en ce que, lors de la déflexion du trajet des rayons de 180°, le détecteur à infrarouge sert de référence.

7. Système selon la revendication 4, caractérisé en ce que les miroirs (32 à 39) sont disposés sur le disque (31) de sorte qu'au moins un évidement (41 à 48) soit ménagé pour que, au moins dans une position, le trajet des rayons ne soit pas dévié.

8. Système selon la revendication 7, caractérisé en ce que l'évidement (9) ménagé sur le dispositif déflecteur permet au détecteur à infrarouge de recevoir le rayonnement d'un étalon de température (12) constituant une référence.

9. Système selon la revendication 7, caractérisé en ce que le dispositif déflecteur (11) est disposé sur une droite située entre un détecteur à infrarouge (9) et un étalon de température (12).

10. Système selon les revendications 6 et 8, caractérisé en ce que la température de la cellule et de la référence sont différentes.

11. Système selon la revendication 10, caractérisé en ce que la différence de température entre le détecteur à infrarouge et l'étalon de température (12) sert à des fins d'étalonnage.

12. Système selon la revendication 9, caractérisé en ce que l'étalon de température (12) se compose d'un corps dont la température est égale ou inférieure à la température ambiante.

13. Système selon la revendication 9, caractérisé en ce que l'étalon de température (12) se compose d'un corps dont la température correspond à au moins la température la plus élevée pouvant apparaître sur les éléments de strucutre (5, 8, 15, 16) à surveiller.

14. Système selon la revendication 9, caractérisé en ce que l'étalon de température (12) se compose d'un corps qui prend successivement plusieurs valeurs de température à l'intérieur d'une plage de températures prédéterminée, grâce à un refroidissement/chauffage contrôlé.

15. Système selon la revendication 4, caractérisé en ce que le dispositif déflecteur (11) est muni d'un émetteur d'angle (49, 50) qui produit des signaux électriques correspondant à l'angle de rotation respectif du disque (31).

16. Système selon la revendication 7, caractérisé en ce qu'un dispositif de codage approprié (49, 50) est relié au dispositif déflecteur tournant (11) et en ce qu'un code est affecté à chacune des surfaces de miroir (32 à 39) et aux évidements (41 à 48) pour affecter les surfaces ou les évidements à des interrupteurs à seuil (67, 68, 69) disposés dans le dispositif d'exploitation (17).

17. Système selon la revendication 15, caractérisé en ce que les signaux émis par l'émetteur d'angle (49, 50) sont prélevés pour qu'en soient dérivés des signaux de déclenchement qui servent à la sélection en fonction du temps des signaux émis par le détecteur à infrarouge (9) correspondant aux éléments de structure à surveiller (5, 8, 15, 16).

18. Système selon la revendication 1, caractérisé en ce que le dispositif d'exploitation (17) comprend plusieurs interrupteurs électroniques (67, 68, 69) pouvant être pilotés pour être placés successivement à l'état conducteur.

19. Système selon la revendication 18, caractérisé en ce que des impulsions de commande pour les interrupteurs électroniques (67, 68, 69) sont dérivées des signaux de sortie des moyens de commutation de voie (14).

20. Système selon la revendication 18, caractérisé en ce que des impulsions de commande pour les interrupteurs électroniques (67, 68, 69) sont dérivées de signaux qui correspondent à la position d'un dispositif déflecteur (11) situé sur le trajet des rayons du dispositif d'exploration (7).

21. Système selon la revendication 17, caractérisé en ce que, sur le trajet des rayons du dispositif d'exploration (7), un dispositif déflecteur (11) est prévu, qui, en succession périodique, amène un étalon de température (12) et un ou plusieurs éléments de structure à surveiller (5, 8, 15, 16) dans l'axe de mesure du dispositif d'exploration (7) et en ce que des impulsions de commande pour les interrupteurs électroniques (67, 68, 69) sont dérivées des signaux de sortie du détecteur à infrarouge (9).

22. Système selon la revendication 1, caractérisé en ce que le dispositif d'exploitation (17) comprend un micro-ordinateur (101).

23. Système selon la revendication 2 destiné à la détection de la température de paliers lisses et à rouleaux, caractérisé en ce que le dispositif déflecteur tournant (11) comprend au moins deux surfaces déflectrices d'inclinaisons différentes et en ce que le dispositif d'exploration est disposé en dessous de palier de roue (5) de la roue ferroviaire passant (1) et l'axe de mesure du dispositif d'exploration (7) oscille entre la verticale et un angle d'élévation inférieur à 45° parallèlement au rail (3) dans la direction de déplacement.

24. Système selon la revendication 2 destiné à la détection de la température de paliers de roues et d'organes de freinage (jantes de roues, disques de freins) caractérisé en ce que le dispositif déflecteur tournant (11) présente des surfaces déflectrices d'inclinaisons différentes de sorte que, avec un axe de mesure vertical (25) la température d'un palier de roue est détectée et que dans l'axe de mesure (26) présentant un angle d'élévation supérieur à 5°, la température d'un organe de freinage est détectée et en ce que le dispositif d'exploration (7) est disposé en dessous du palier de roue (5) de la roue ferroviaire passant (11) et l'axe de mesure du dispositif d'exploration (7) oscille entre la verticale et un angle d'élévation de 5°, verticalement, et un certain angle par rapport à l'axe de la voie, horizontalement.

Fig. 1

Fig. 2

Fig. 3

Fig. 4

Fig. 5

EP 0 263 217 B1

EP 0 263 217 B1

Fig. 6

Fig. 7

Fig. 8

Fig. 9